# EUROPEAN PATENT SPECIFICATION

(11) **EP 4 303 056 B1**
(45) Date of publication and mention of the grant of the patent: **12.11.2025**
(21) Application number: 22183493.0
(22) Date of filing: 07.07.2022
(51) Int. Cl.: B60K 35/23, B60K 35/235, B60K 35/28, B60K 35/60, B60K 35/65, B60K 35/81, G02B 27/01, G06F 3/01

(54) **METHOD AND SYSTEM FOR CONTROLLING A DISPLAY DEVICE IN A VEHICLE**
VERFAHREN UND SYSTEM ZUR STEUERUNG EINER ANZEIGEVORRICHTUNG IN EINEM FAHRZEUG
PROCÉDÉ ET SYSTÈME DE COMMANDE D'UN DISPOSITIF D'AFFICHAGE DANS UN VÉHICULE

(43) Date of publication of application: 10.01.2024
(73) Proprietor: Bayerische Motoren Werke Aktiengesellschaft, 80809 München (DE)
(72) Inventor: Zaki, Tarek, 81829 München (DE)

(56) References cited:
- US-A1- 2018 011 313
- US-A1- 2019 011 712
- US-A1- 2019 315 275
- US-A1- 2020 333 608

## Description

The present invention relates to the field of controlling a display device in a vehicle, and more particularly to the field of displaying content on a display device of a vehicle. Specifically, the invention relates to a method and system for controlling a display device in a vehicle.

Modern vehicles, such as cars, are often provided with display devices for displaying content such as information about the current trip, like current speed, speed limitation, etc., navigation system information, driving assistant information or any other content from the infotainment system or content concerning the vehicle. Those display devices may provide a driver with useful information. However, many display devices are positioned in a central console, dashboard or even steering wheel of the vehicle such that the driver must take gaze away from the road and, thus, cannot pay full attention to the traffic at the same time.

Some vehicles are equipped with a so-called head-up display (HUD). A HUD projects the content to be displayed to a surface that is within the field of view of the driver, such as the windshield of the vehicle or a transparent board positioned in front of the steering wheel. The displayed content may then appear above the hood of the vehicle or even on the road ahead of the vehicle. This facilitates readability of the content since the driver is not required to look away from the road or to change focus. However, during driving, a driver may look into various directions. For instance, when turning left or right, the driver may look into the respective direction. If content displayed by a head-up display is at a fixed position, the driver will then again have to take gaze away from the road. While this is relevant particular with regards to driving safety, looking into different directions between the road or driving direction and a display device, may cause motion sickness for the driver. Particularly display devices having a large design, e.g., having a large width, require even more head movement of the driver.

Attempts have been made to compensate for different viewing directions of the driver by adjusting a view of the displayed content e.g., by moving the content that is displayed on a display device. However, when moving the displayed content, it may have a distorted appearance for the driver. This may reduce readability and may again require increased attention for reading the content, which may distract the driver's attention from the traffic.

US 2019/011712 A1 discloses an image display apparatus for a vehicle, such as a HUD, with an image display unit, a mirror that reflects the image light output by the image display unit toward a windshield, a mirror drive unit that changes the angle and position of the mirror, and a control unit that determines amounts of change in the angle and position of the mirror and controls the mirror drive unit. The control unit makes determinations of the amount of change for the angle and position of the mirror in association with each other such that the image is visible even if the position of the driver's eyes changes and the display state of the image with respect to the driver does not change.

US 2018/011313 A1 discloses a method for displaying information on one or more surfaces of a vehicle, the method comprising acquiring position data associated with a driver of the vehicle, calculating a current field-of-view of the driver based on the position data, determining a suitable surface for displaying visual information within the vehicle based on the current field-of-view of the driver, and projecting an element of visual information on the suitable surface.

US 2020/333608 A1 a display device for displaying a virtual image so as to be visually perceived by an occupant of a moving body through a transparent member. The display device includes an image generator configured to generate an image to be displayed as a virtual image, an orientation information acquisition unit configured to acquire information on an orientation of the moving body, and a display change processor configured to change the display of the virtual image in accordance with the information on the orientation acquired by the orientation information acquisition unit.

US 2019/315275 A1 discloses a display device with a front display unit, a side display unit including a left display unit and a right display unit, a communication unit for receiving external image data, a sensing unit for sensing a user, and a control unit for controlling an operation of the display device, wherein the control unit is configured to measure a position of the user's eyes inside a vehicle and a distance between the front display unit and the side display unit and the user's eyes by using the sensing unit, calculate the user's visible view and viewing angle through measured data, and process external image data corresponding to the calculated visible view to output the same to the side display unit.

It is an object of the present invention to provide an improved approach for displaying a content on a display device of a vehicle. Specifically, it is desirable to improve readability of a displayed content considering a certain drive situation, particularly including a driving direction of the vehicle and/or a driver's direction of gaze.

A solution to this problem is provided by the teaching of the independent claims. Various preferred embodiments of the present invention are provided by the teachings of the dependent claims.

A first aspect of the invention is directed to a, particularly computer-implemented, method of controlling a display device in a vehicle. A content to be displayed by the display device is provided. A drive situation dependent condition is determined and based on the determined drive dependent condition a view adjustment function is determined, the view adjustment function including a positional adjustment and a perspective adjustment of a view of the content. An adjusted view of the content is determined in accordance with the view adjustment function, and the content is displayed in the adjusted view by the display device.

Accordingly, the method may be considered an improved method for controlling a display device in a vehicle. By not only applying a positional adjustment but also a perspective adjustment to a view of a content to be displayed readability of the content can be improved for a driver of the vehicle. Particularly for large positional adjustments a view of the content may become distorted if no perspective adjustment is applied. Thus, the method can contribute to driving safety as it may ensure that the driver can read the displayed content at a convenient position, where distortion possibly caused by the positional adjustment can be corrected by means of the perspective adjustment.

An additional benefit of the method can be achieved in that the adjustment of the view provides an enhanced user experience. The content may be positioned and may look like the driver would most likely expect. Thus, a seamless user experience can be created while driving. In other words, the displayed content may merge into the view of the driver without distracting them from safe driving.

The term "vehicle", as used herein, refers particularly to a car, including any type of motor vehicles, hybrid electric vehicles and battery electric vehicles as well as other vehicles like trucks, vans, or busses.

The term "content", as used herein, refers particularly to data that is processed to be displayed by a display device of the vehicle to be readable by a user, particularly a driver of the vehicle. The content may represent any type of information concerning the vehicle, e.g., obtained by a processing unit (e.g., ECU) of the vehicle, by a navigation system or infotainment system. The content may specifically represent data about a trip of the vehicle, such as current speed, time, remaining fuel or power, or other data typically shown by a dashboard of the vehicle. The content may also relate to navigation data, like directing arrows, directing notes, street names, or any other navigation system information. Apart from that, driving assisting data may be represented by the content, such as speed limits, distance to another vehicle or the like. The content may also relate to other infotainment system information. A "view" of the content is the appearance of the content a user sees on a display device. This may be a single image or an animated view.

The term "drive situation dependent condition", as used herein, refers particularly to any condition that is dependent on a drive situation of the vehicle. This may refer to operation of the vehicle, such as driving direction, turns, speed, acceleration, brake actions or the like. A drive situation may also refer to driver, particularly operations of the driver that relate to a drive situation, including actions or reactions, such as movements of the driver, particularly head or eye movement, and a viewing direction (direction of gaze) of the driver.

The term "adjustment function", as used herein, refers particularly to a function that can be applied to a view of the content in order to adjust the view with regards to its position and perspective as will be explained below. The adjustment function may be applied to every pixel of the displayed view, which may result in at least one of a shift in any direction, a rotation in any direction or any distortion of the view. Thus, the adjustment function may be considered as a mapping function between a first view and a second view of the content, wherein the second view may be referred to as "adjusted view".

The term "positional adjustment", as used herein, refers particularly to an adjustment of a view of the content that relates to its position of the view on the display device. This may specifically include a shift in any direction. Likewise, any rotation or tilt of the view may be considered to be a positional adjustment.

The term "perspective adjustment", as used herein, refers particularly to an adjustment of a view of the content that relates to its perspective view. This may specifically include any adjustment of the view that affects its shape and/or size. A perspective adjustment may be achieved by any distortion of the view, e.g., trapezoidal or spherical distortions.

If applicable, the terms "first", "second", "third" and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Where the term "comprising" or "including" is used in the present description and claims, it does not exclude other elements or steps. Where an indefinite or definite article is used when referring to a singular noun e.g., "a" or "an", "the", this includes a plural of that noun unless something else is specifically stated.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In the following, preferred embodiments of the method are described, which can be arbitrarily combined with each other or with other aspects of the present invention, unless such combination is explicitly excluded or technically impossible.

In some embodiments, the drive situation dependent condition comprises a driver's direction of gaze. The driver's direction of gaze, i.e., the direction in which the driver is actually looking, may be advantageously provide an input parameter for the adjustment function. Independent from an actual action of the vehicle, the driver's direction gaze may indicate where content should be displayed by the display device to be best readable for the driver. For instance, the driver may look into a certain direction even before the vehicle actually turns in that direction. Likewise, the driver may change the direction of gaze, e.g., for a lane change. As the displayed content is likely to be in the driver's field of view, not only readability can be improved but also the risk of motion sickness can be reduced.

In some related embodiments, the driver's direction of gaze is determined by means of at least one in-vehicle camera, wherein the camera is directed to the driver to capture a motion of the driver's head and/or the driver's eyes. Using a camera specifically provides an easy an efficient way to determine a driver's direction of gaze. Possibly, the vehicle is equipped with one or more cameras for other purposes that rely on motion of the driver's head or eyes. Some applications may use eye-tracking, which may be utilized for adjusting a view of a content to be displayed by a display device in the vehicle. However, in order to avoid too many adjustments of the displayed content, which could be perceived as confusing or disturbing, it may be preferable to relay on head-tracking rather than eye-tracking.

In some embodiments, the drive situation dependent condition comprises a driving direction of the vehicle. Alternatively or in addition to the driver's direction of gaze, the driving direction may provide an input parameter for the adjustment function to adjust a view of the content. For instance, when driving in a straight direction, there may be no adjustment of the view of the content. However, when turning left or right, the adjusted view of the content may be a shifted view in the respective direction. Most likely, the driver will tend to look into the driving direction of the vehicle. Thus, such shift in the respective direction may improve readability of the content, which is further improved by the perspective adjustment at the same time. As the displayed content is likely to be in the driver's field of view, not only readability can be improved but also the risk of motion sickness can be reduced.

In some related embodiments, the driving direction of the vehicle is determined by determining a steering wheel angle. The steering wheel angle may be detected by respective vehicle sensors. Thus, an easy way is provided to determine the driving direction of the vehicle. Specifically, a certain amount of the steering wheel angle in the left or right direction may cause a movement of the displayed content to the left or right, respectively, corresponding to the amount of the steering wheel angle. It will be appreciated that this adjusted view also includes the perspective adjustment as set forth above.

In some embodiments, the positional adjustment includes a horizontal movement of the content in accordance with a gaze-horizon-view angle of the driver. Rather than looking up and down, the driver tends to look at a horizon line and may turn his gaze along the horizon line. Thus, an efficient way of adjusting the view of the displayed content may be moving it in a horizontal direction. Based on a distance to a center, which would refer to a straightforward direction of gaze of the driver, the adjusted view of the content may include a respective perspective correction.

In some embodiments the perspective adjustment is determined based on the positional adjustment. In other words, the perspective adjustment may be dependent on the positional adjustment. More specifically, the perspective adjustment can be determined so as to compensate for perspective distortions that might be caused by the positional adjustment. In this way, readability of the displayed content in the adjusted view may be improved regardless of the position where the content is displayed.

In some embodiments, the perspective adjustment includes a distortion of the content such that the content appears with consistent proportions of dimensions for the driver in each adjusted view of the content. In other words, it is preferable that the content displayed by the displayed device has a consistent appearance independent from position of the content in the respective adjusted view. The displayed content will not appear distorted for the driver if the proportions of dimensions are always the same. While other perspective adjustments may be implemented, a perspective adjustment that aims at consistent proportions of dimensions may be considered most convenient for most users.

According to the invention, the content is displayed on a virtual curved surface at least partially surrounding the driver, wherein at least one of the positional adjustment and the perspective adjustment includes a movement of the content along the virtual curved surface. The virtual curved surface has a center of curvature in a region of the driver's head. The position of the driver's head may be determined, e.g., by means of an in-cabin camera. With the driver's head in the center of the virtual curved surface, views of the content moving along the virtual curved surface may always achieve a desired impression for the driver. A radius of curvature may be chosen such that the virtual curved surface surrounds the driver's head, and more specifically such that the virtual curved surface even surrounds the vehicle or is located at least partially outside the vehicle, particularly in front of the vehicle. This may be particularly advantageous for head-up displays as the views of the content may easily appear in front of the driver above the hood of the vehicle or on the street ahead of the vehicle.

In some embodiments, the drive situation dependent condition comprises at least one of an acceleration and a deceleration of the vehicle, wherein in case of an acceleration of the vehicle the adjustment function is determined such that the content appears farther away from the driver in the adjusted view, and in case of an acceleration of the vehicle the adjustment function is determined such that the content appears closer to the driver in the adjusted view. Such adjustment of the view may consider a natural distant view or near view of the driver when accelerating and decelerating, respectively.

In some embodiments, a background to be displayed along with the content is provided. The view adjustment function may comprise a movement of a background displayed by the display device relative to the displayed content. A movement of the background may create an impression of a depth of the displayed view. This effect may be particularly achieved when the driver's view of gaze is input to the adjustment function and may improve the user experience. Furthermore, it may be advantageous to separate the content to be displayed from a background. The adjustment of the view of the actual content along with a respective movement of the background may also contribute to reducing the risk of motion sickness. It will be appreciated that only slight movement of the background may be desired or necessary.

In some embodiments, the display device is a head-up display of the vehicle. The head-up display me be configured to display content such that it appears in the windshield of the vehicle. Specifically, the content may appear in a region above the hood of the vehicle. While a projecting surface of a head-up display may cover only a limited region in front of the driver, modern head-up display may cover a wider region extending across the windshield. For instance, when a driver (of a left-hand drive vehicle) looks far to the right, the view of the content displayed by the head-up display may be shifted to the right accordingly. By applying the perspective adjustment, the content may always be clearly readable for the driver without being distorted. In cases where the content may be displayed in such a way that it appears for the driver on the road ahead of the vehicle, the appearance of the content can be improved by the above-described adjustment. The adjustment allows content to appear correctly on the road not only for straight road but also in curves. Likewise, it can be achieved that content appears on a desired lane of the road.

In some embodiments, the display device is a display in a steering wheel of the vehicle. In this case, the display device will move when turning the steering wheel. If no adjustment is applied on the view of displayed content, the content will change its orientation in accordance with the steering wheel, e.g., will appear upside-down upon a 90 degree turn of the steering wheel. Thus, it is advantageous to apply a positional adjustment to the view, which may include a tilt or rotation of the content, where a tilt or rotation angle of the content may be chosen in accordance with the steering wheel angle, i.e. to compensate for the rotation of the steering wheel. Apart from that, it is advantageous to apply a perspective adjustment to further improve readability of the content, particularly for changes of the steering wheel angle that result in a large position change of the display device, e.g., 45 to 135 degrees, specifically around 90 degrees.

In some embodiments, the display device is a display in at least one of a central console, a dashboard, a rear-view mirror, and a side-view mirror of the vehicle. The method may be applied also for such fixed display devices to improve readability of the content.

In some embodiments, the display device is a display in a region adjacent to the windshield. Such display device may be located, e.g., in the A-pillar, door or side window of the vehicle. Considering its location next to the windshield, particularly the sides of the windshield, it may be envisioned to extend a view of a head-up display. Since such view would extend from far left to far right across the vehicle, the method may be particularly advantageous to adjust a view of a displayed content.

In some embodiments, the content is displayed by the display device in such a way that it is fully visible only for the driver. Possibly, the display device can be configured such that another passenger in the vehicle, in particular a co-driver, does not see anything or another content. This may be particularly advantageous for a wide head-up display because the content may be shifted far to the right into the co-driver's field of view (for left-hand drive vehicles), which may be disturbing for the co-driver. For instance, the display device may be configured to display content that is relevant for driving to the driver and may display entertainment content to the co-driver. Specifically, the display device may be at least partially polarized to enable a view of the content for a driver of the vehicle while a view of the content is at least partially blocked for a co-driver.

In some embodiments, the vehicle has at least two display devices and the positional adjustment includes a selection of one of the display devices, wherein the content is displayed in the adjusted view by the selected display device, particularly only by the selected display device. In this way, the content can be displayed by a respective one of a plurality of display devices in the vehicle that would be appropriate for the drive dependent condition. For instance, the content may be displayed only by a display device the driver is actually looking at. This may ensure that the driver is always capable of reading the displayed content, while other display devices, which are out of the driver's field of view, need not display the content.

A second aspect of the present invention is directed to a data processing system being configured to perform the method of the first aspect, i.e. a data processing system for controlling a display device in a vehicle. The data processing system might specifically be configured by means of one or more computer programs to perform the method of the first aspect. In addition, or alternatively, the configuration may be implemented, in whole or in parts by respective hardware. Specifically, the system comprises an evaluation unit and a control unit. The evaluation unit is configured to determine a drive situation dependent condition and to determine a view adjustment function based on the determined drive dependent condition, the view adjustment function including a positional adjustment and a perspective adjustment of a view of the content, and to determine an adjusted view of a content to be displayed in accordance with the view adjustment function. The control unit is configured to control the display device to cause the display device to display the content in the adjusted view.

A third aspect of the present invention is directed to a computer program or a computer program product, comprising instructions, which when executed on a data processing system according to the second aspect of the invention cause the system to perform the method according to the first aspect of the invention.

The computer program (product) may in particular be implemented in the form of a data carrier on which one or more programs for performing the method are stored. Preferably, this is a data carrier, such as a CD, a DVD or other optical medium, or a flash memory module. This may be advantageous, if the computer program product is meant to be traded as an individual product independent from the processor platform on which the one or more programs are to be executed. In another implementation, the computer program product is provided as a file on a data processing unit, in particular on a server, and can be downloaded via a data connection, e.g., the internet or a dedicated data connection, such as a proprietary or local area network.

The system of the second aspect may accordingly have a program memory in which the computer program is stored. Alternatively, the system may also be set up to access a computer program available externally, for example on one or more servers or other data processing units, via a communication link, in particular to exchange with it data used during the course of the execution of the computer program or representing outputs of the computer program.

The explanations, embodiments and advantages described above in connection with the method of the first aspect similarly apply to the other aspects of the invention.

Further advantages, features and applications of the present invention are provided in the following detailed description and the appended figures, wherein:
Fig. 1 schematically illustrates an exemplary embodiment of a method according to the present invention;
Fig. 2 schematically illustrates an interior of a vehicle; and
Fig. 3 shows a schematic illustration of an adjustment of displayed content.

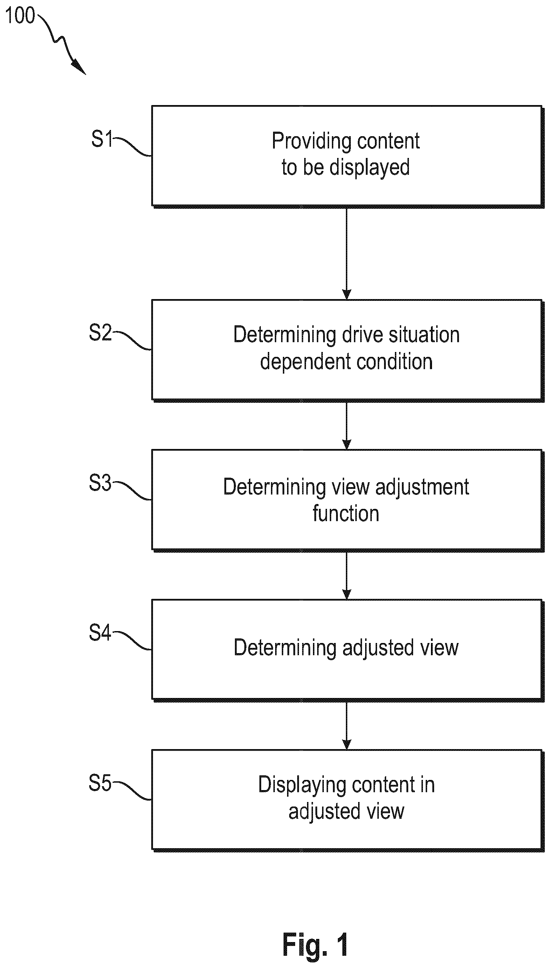

Referring to Fig. 1 an exemplary embodiment 100 of a method of the first aspect of the present invention comprises a step S1 of providing a content to be displayed by a display device in a vehicle. The content may be provided by acquiring or receiving vehicle data, such as current speed or the like, from a control unit (e.g., ECU) of the vehicle, navigation data, driving assistant data or other data, like infotainment data. Typically, the content has a standard view, i.e., the view a driver should typically see. The standard view may be considered as undistorted and provides appropriate readability of the content.

In a step S2, a drive situation dependent condition is determined. A condition that is dependent on a drive situation may be simply a driving direction of the vehicle. The driving direction can be determined by a steering wheel angle. While the driving direction of the vehicle may be an indication for a direction in which the driver is looking, the driver's direction of view (direction of gaze) may be determined by monitoring motions the driver makes. For instance, an in-cabin camera may be configured to detect motions of the driver's head. Likewise, motions of the driver's eyes may be detected by an in-cabin camera.

Based on the determined drive situation dependent condition, a view adjustment function is determined in a step S3. View adjustment of the content particularly comprises a positional adjustment and a perspective adjustment. In other words, the view adjustment function is determined to consider not only a position or change of a position of the content, i.e., where the content is displayed on the display device, but also determines a perspective adjustment. The perspective adjustment (or perspective correction) may be determined so as to compensate for possible distortions that may be caused by a positional change of the displayed content. It may be considered advantageous if the perspective adjustment results in an undistorted view of the content for the driver regardless of where the content is displayed.

Based on a current view (or possibly the aforementioned standard view) an adjusted view of the content is then determined (step S4). Finally, the content is displayed by the display device in the adjusted view (step S5). It may be desirable to limit an amount of adjustment, i.e., to make only subtle adjustment of the view of the content. Little adjustment may be sufficient to achieve a pleasant result for the driver, which may reduce the risk of motion sickness. Likewise, driving safety may be increased because the content will always appear distortion-free in the driver's field of view.

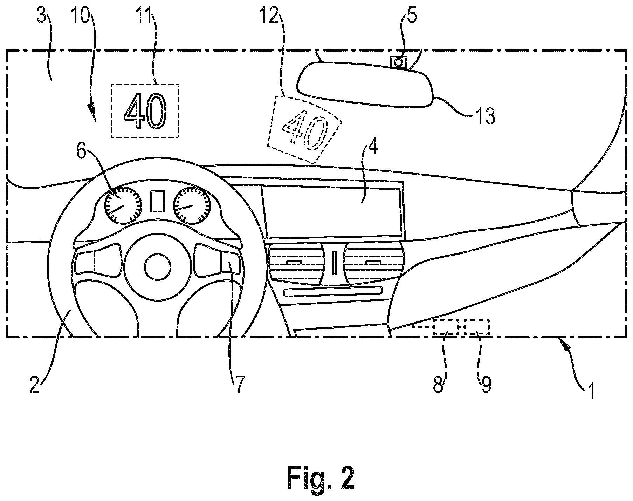

In **Fig. 2****,** an exemplary interior view of a vehicle 1 is illustrated. The interior may be equipped with various display devices, which may be controlled by the above-described method 100. For instance, the adjustment of displayed content may be applied for a display of an infotainment system 4 on a central console or a display 7 in the steering wheel. The method 100 may be particularly beneficial for a head-up display 10, which is configured to display content in the region of the windshield 3 of the vehicle 1 such that the content appears above the hood or ahead of the vehicle on the road. A content may be a current speed of the vehicle, which is indicated in Fig. 2 by the number "40" by way of example. The number "40" is shown in a view 11, which appears in a central position above the steering wheel and may be a standard view for a straight driving direction and a neutral and straightforward gaze of the driver. A direction of gaze of the driver may be determined by an in-cabin camera 5 mounted e.g., in an area of a rear-view mirror 13.

Fig. 2 also indicates in dotted lines an adjusted view 12 of the number "40", which may be an appropriate view if the driver looks to the right and/or the vehicle turns to the right. As can be seen in the schematic illustration of Fig. 2 not only the position of the number "40" has change in the view 12 compared to the view 11 by a shift to the right, but the view 12 also includes a perspective correction of the number "40" such that it appears free of distortion also in the position of view 12. Fig. 2 also illustrates an evaluation unit 8 for determining the adjusted view of the content and a control unit 9 for controlling the display.

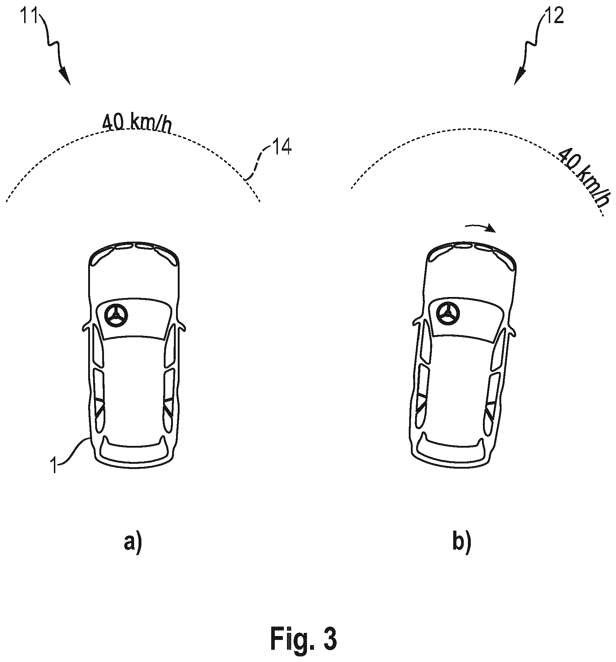

Referring now to **Fig. 3** an adjustment of a view of a content displayed by a head-up display of a vehicle 1 is schematically illustrated similar to the exampled explained above with respect to Fig. 2. The content in the example of Fig. 3 is a current speed indicated by the display of the expression "40 km/h". While in a straight driving direction of the vehicle (Fig. 3a) the content appears in a view 11 straight in front of the driver, the content is shifted to the right and shown in an adjusted view 12 when the vehicle 1 turns right (Fig. 3b). The respective view of the content is determined such that the driver sees an undistorted view of the content.

Indicated in Fig. 3 is a virtual curved surface 14, which may serve as a basis for determining an appropriate view, such as the view 11 and the adjusted view 12. A center of curvature may be considered to be the driver, or more specifically the driver's head. A radius of curvature of the curved surface may be chosen such that the virtual curved surface 14 would be located around the vehicle 1 as shown in Fig. 3, specifically outside the vehicle 1 at least in front of the vehicle 1. In this way, a perspective adjustment can be easily determined, as well as a positional adjustment. The positional adjustment of the displayed content may be achieved by moving the content along the virtual curved surface 14, which automatically would lead to a desired perspective adjustment. Likewise, a size of the displayed view of the content may be determined such that the content appears for the driver the same size for every position it is displayed.

While the curved surface 14 may be assumed to be substantially spherical, a curvature of the surface may be varied to be, e.g., elliptical, or the center of curvature may be changed. As mentioned above, the virtual curved surface 14 may surround the vehicle with the driver in the center. This may be utilized to achieve further effects of adjustment of the view, e.g., a size and shape of the virtual curved surface 14 may be adapted depending on a drive situation. For instance, when the vehicle accelerates, the surface 14 may be extended in the driving direction such that the content appears farther away from the driver. Vice versa, when the vehicle brakes, the surface 14 may be compressed in the driving direction such that the content appears closer to the driver. This effect may likewise be achieved by shifting the center of curvature. Such adjustment may consider address the natural change of focus of the driver during the respective drive situation and may, thus, further improve readability of the content and the overall user experience.

While above at least one exemplary embodiment of the present invention has been described, it has to be noted that a great number of variations thereto exists. Furthermore, it is appreciated that the described exemplary embodiments only illustrate non-limiting examples of how the present invention can be implemented and that it is not intended to limit the scope, the application or the configuration of the herein-described apparatuses and methods. Rather, the preceding description will provide the person skilled in the art with constructions for implementing at least one exemplary embodiment of the invention, wherein it has to be understood that various changes of functionality and the arrangement of the elements of the exemplary embodiment can be made, without deviating from the subject-matter defined by the appended claims.

### LIST OF REFERENCE SIGNS

- 100: exemplary embodiment of a method of controlling a display device in a vehicle

- 1: vehicle
- 2: steering wheel
- 3: windshield
- 4: infotainment system
- 5: camera
- 6: dashboard
- 7: display in steering wheel
- 8: evaluation unit
- 9: control unit
- 10: head-up display
- 11: view of content
- 12: adjusted view of content
- 13: rear-view mirror
- 14: virtual curved surface

## Claims

1. A method (100) of controlling a display device (10) in a vehicle (1), the method comprising:
- providing (S1) a content to be displayed by the display device (10);
- determining (S2) a drive situation dependent condition;
- determining (S3) a view adjustment function based on the determined drive dependent condition, the view adjustment function including a positional adjustment and a perspective adjustment of a view (11) of the content;
- determining (S4) an adjusted view (12) of the content in accordance with the view adjustment function; and
- displaying (S5) the content in the adjusted view (12),
**characterized in that** the content is displayed on a virtual curved surface (14) at least partially surrounding a driver, wherein the virtual curved surface (14) has a center of curvature in a region of the driver's head, wherein at least one of the positional adjustment and the perspective adjustment includes a movement of the content along the virtual curved surface (14).

2. The method of claim 1, wherein the drive situation dependent condition comprises a driver's direction of gaze.

3. The method of claim 2, wherein the driver's direction of gaze is determined by means of an in-vehicle camera (5), wherein the camera (5) is directed to the driver to capture a motion of the driver's head and/or the driver's eyes.

4. The method of any one of the preceding claims, wherein the drive situation dependent condition comprises a driving direction of the vehicle (1).

5. The method of claim 4, wherein the driving direction of the vehicle (1) is determined by determining a steering wheel angle.

6. The method of any one of the preceding claims, wherein the positional adjustment includes a horizontal movement of the content in accordance with a gaze-horizon-view angle of the driver.

7. The method of any one of the preceding claims, wherein the perspective adjustment is determined based on the positional adjustment.

8. The method of any one of the preceding claims, wherein the perspective adjustment includes a distortion of the content such that the content appears with consistent proportions of dimensions for the driver in each adjusted view of the content.

9. The method of any one of the preceding claims, wherein the drive situation dependent condition comprises at least one of an acceleration and a deceleration of the vehicle (1), wherein in case of an acceleration of the vehicle (1) the adjustment function is determined such that the content appears farther away from the driver in the adjusted view, and in case of an acceleration of the vehicle (1) the adjustment function is determined such that the content appears closer to the driver in the adjusted view.

10. The method of any one of the preceding claims, further comprising providing a background to be displayed by the display device along with the content, wherein the view adjustment function comprises a movement of the background relative to the content.

11. The method of any one of the preceding claims, wherein the display device (10) is a head-up display of the vehicle.

12. The method of any one of the preceding claims, wherein the display device is a display (7) in a steering wheel (2) of the vehicle (1), or wherein the display device is a display in at least one of a central console (4), a dashboard (6), a rear-view mirror (13), and a side-view mirror of the vehicle (1), or wherein the display device is a display in a region adjacent to a windshield (3) of the vehicle (1).

13. The method of any one of the preceding claims, wherein the content is displayed by the display device in such a way that it is fully visible only for the driver.

14. A data processing system for controlling a display device (10) in a vehicle (1), the system being configured to perform the method (100) of any one of claims 1 to 13, the system comprising an evaluation unit (8) and a control unit (9), wherein the evaluation unit (8) is configured to determine a drive situation dependent condition and to determine a view adjustment function based on the determined drive dependent condition, the view adjustment function including a positional adjustment and a perspective adjustment of a view (11) of the content, and to determine an adjusted view (12) of a content to be displayed in accordance with the view adjustment function, and the control unit (9) is configured to control the display device (10) to cause the display device (10) to display the content in the adjusted view (12).

15. A computer program or a computer program product, comprising instructions, which when executed on one or more processors of a system according to claim 14 cause the system to perform the method (100) according to any one of claims 1 to 13.

## Patentansprüche

1. Verfahren (100) zur Steuerung einer Anzeigevorrichtung (10) in einem Fahrzeug (1), wobei das Verfahren umfasst:
• Bereitstellen (S1) eines durch die Anzeigevorrichtung (10) anzuzeigenden Inhalts;
• Bestimmen (S2) einer fahrsituationsabhängigen Bedingung;
• Bestimmen (S3) einer Ansichtsanpassungsfunktion basierend auf der bestimmten fahrabhängigen Bedingung, wobei die Ansichtsanpassungsfunktion eine Positionsanpassung und eine Perspektivenanpassung einer Ansicht (11) des Inhalts umfasst;
• Bestimmen (S4) einer angepassten Ansicht (12) des Inhalts gemäß der Ansichtsanpassungsfunktion; und
• Anzeigen (S5) des Inhalts in der angepassten Ansicht (12),
**dadurch gekennzeichnet, dass** der Inhalt auf einer virtuellen gekrümmten Oberfläche (14) angezeigt wird, die den Fahrer zumindest teilweise umgibt, wobei die virtuelle gekrümmte Oberfläche (14) ein Krümmungszentrum in einem Bereich des Fahrerkopfes aufweist, wobei mindestens eine der Positionsanpassung und der Perspektivenanpassung eine Bewegung des Inhalts entlang der virtuellen gekrümmten Oberfläche (14) beinhaltet.

2. Verfahren nach Anspruch 1, wobei die fahrsituationsabhängige Bedingung eine Blickrichtung des Fahrers umfasst.

3. Verfahren nach Anspruch 2, wobei die Blickrichtung des Fahrers mittels einer fahrzeuginternen Kamera (5) bestimmt wird, wobei die Kamera (5) auf den Fahrer gerichtet ist, um eine Bewegung des Fahrerkopfes und/oder der Fahreraugen zu erfassen.

4. Verfahren nach einem der vorhergehenden Ansprüche, wobei die fahrsituationsabhängige Bedingung eine Fahrtrichtung des Fahrzeugs (1) umfasst.

5. Verfahren nach Anspruch 4, wobei die Fahrtrichtung des Fahrzeugs (1) durch Bestimmen eines Lenkradwinkels ermittelt wird.

6. Verfahren nach einem der vorhergehenden Ansprüche, wobei die Positionsanpassung eine horizontale Bewegung des Inhalts entsprechend einem Blick-Horizont-Sichtwinkel des Fahrers beinhaltet.

7. Verfahren nach einem der vorhergehenden Ansprüche, wobei die Perspektivenanpassung basierend auf der Positionsanpassung bestimmt wird.

8. Verfahren nach einem der vorhergehenden Ansprüche, wobei die Perspektivenanpassung eine Verzerrung des Inhalts beinhaltet, sodass der Inhalt für den Fahrer in jeder angepassten Ansicht des Inhalts mit konsistenten Proportionen der Abmessungen erscheint.

9. Verfahren nach einem der vorhergehenden Ansprüche, wobei die fahrsituationsabhängige Bedingung mindestens eine von einer Beschleunigung und einer Verzögerung des Fahrzeugs (1) umfasst, wobei im Falle einer Beschleunigung des Fahrzeugs (1) die Anpassungsfunktion so bestimmt wird, dass der Inhalt in der angepassten Ansicht weiter vom Fahrer entfernt erscheint, und im Falle einer Verzögerung des Fahrzeugs (1) die Anpassungsfunktion so bestimmt wird, dass der Inhalt in der angepassten Ansicht näher am Fahrer erscheint.

10. Verfahren nach einem der vorhergehenden Ansprüche, ferner umfassend das Bereitstellen eines Hintergrunds, der von der Anzeigevorrichtung zusammen mit dem Inhalt angezeigt werden soll, wobei die Ansichtsanpassungsfunktion eine Bewegung des Hintergrunds relativ zum Inhalt umfasst.

11. Verfahren nach einem der vorhergehenden Ansprüche, wobei die Anzeigevorrichtung (10) ein Head-up-Display des Fahrzeugs ist.

12. Verfahren nach einem der vorhergehenden Ansprüche, wobei die Anzeigevorrichtung eine Anzeige (7) in einem Lenkrad (2) des Fahrzeugs (1) ist, oder wobei die Anzeigevorrichtung eine Anzeige in mindestens einem von einer Mittelkonsole (4), einem Armaturenbrett (6), einem Rückspiegel (13) und einem Seitenspiegel des Fahrzeugs (1) ist, oder wobei die Anzeigevorrichtung eine Anzeige in einem Bereich angrenzend an eine Windschutzscheibe (3) des Fahrzeugs (1) ist.

13. Verfahren nach einem der vorhergehenden Ansprüche, wobei der Inhalt durch die Anzeigevorrichtung so angezeigt wird, dass er nur für den Fahrer vollständig sichtbar ist.

14. Datenverarbeitungssystem zur Steuerung einer Anzeigevorrichtung (10) in einem Fahrzeug (1), wobei das System konfiguriert ist, das Verfahren (100) nach einem der Ansprüche 1 bis 13 durchzuführen, wobei das System eine Auswertungseinheit (8) und eine Steuereinheit (9) umfasst, wobei die Auswertungseinheit (8) konfiguriert ist, eine fahrsituationsabhängige Bedingung zu bestimmen und eine Ansichtsanpassungsfunktion basierend auf der bestimmten fahrabhängigen Bedingung zu bestimmen, wobei die Ansichtsanpassungsfunktion eine Positionsanpassung und eine Perspektivenanpassung einer Ansicht (11) des Inhalts umfasst, und eine angepasste Ansicht (12) eines anzuzeigenden Inhalts gemäß der Ansichtsanpassungsfunktion zu bestimmen, und die Steuereinheit (9) konfiguriert ist, die Anzeigevorrichtung (10) zu steuern, um die Anzeigevorrichtung (10) zu veranlassen, den Inhalt in der angepassten Ansicht (12) anzuzeigen.

15. Computerprogramm oder Computerprogrammprodukt, umfassend Anweisungen, die, wenn sie auf einem oder mehreren Prozessoren eines Systems nach Anspruch 14 ausgeführt werden, das System veranlassen, das Verfahren (100) nach einem der

## Revendications

1. Procédé (100) de commande d'un dispositif d'affichage (10) dans un véhicule (1), le procédé comprenant :
• la fourniture (S1) d'un contenu à afficher par le dispositif d'affichage (10) ;
• la détermination (S2) d'une condition dépendante de la situation de conduite ;
• la détermination (S3) d'une fonction d'ajustement de vue basée sur la condition dépendante de la conduite déterminée, la fonction d'ajustement de vue comprenant un ajustement de position et un ajustement de perspective d'une vue (11) du contenu
• la détermination (S4) d'une vue ajustée (12) du contenu conformément à la fonction d'ajustement de vue ; et
• l'affichage (S5) du contenu dans la vue ajustée (12),
**caractérisé en ce que** le contenu est affiché sur une surface courbe virtuelle (14) entourant au moins partiellement un conducteur, dans lequel la surface courbe virtuelle (14) a un centre de courbure dans une région de la tête du conducteur, dans lequel au moins l'un de l'ajustement de position et de l'ajustement de perspective comprend un mouvement du contenu le long de la surface courbe virtuelle (14).

2. Procédé selon la revendication 1, dans lequel la condition dépendante de la situation de conduite comprend une direction du regard du conducteur.

3. Procédé selon la revendication 2, dans lequel la direction du regard du conducteur est déterminée au moyen d'une caméra (5) dans le véhicule, la caméra (5) étant dirigée vers le conducteur pour capturer un mouvement de la tête du conducteur et/ou des yeux du conducteur.

4. Procédé selon l'une quelconque des revendications précédentes, dans lequel la condition dépendante de la situation de conduite comprend une direction de conduite du véhicule (1).

5. Procédé selon la revendication 4, dans lequel la direction de conduite du véhicule (1) est déterminée en déterminant un angle du volant.

6. Procédé selon l'une quelconque des revendications précédentes, dans lequel l'ajustement de position comprend un mouvement horizontal du contenu conformément à un angle de vue regard-horizon du conducteur.

7. Procédé selon l'une quelconque des revendications précédentes, dans lequel l'ajustement de perspective est déterminé sur la base de l'ajustement de position.

8. Procédé selon l'une quelconque des revendications précédentes, dans lequel l'ajustement de perspective comprend une distorsion du contenu de telle sorte que le contenu apparaisse avec des proportions de dimensions cohérentes pour le conducteur dans chaque vue ajustée du contenu.

9. Procédé selon l'une quelconque des revendications précédentes, dans lequel la condition dépendante de la situation de conduite comprend au moins l'une d'une accélération et d'une décélération du véhicule (1), dans lequel en cas d'accélération du véhicule (1), la fonction d'ajustement est déterminée de telle sorte que le contenu apparaisse plus éloigné du conducteur dans la vue ajustée, et en cas de décélération du véhicule (1), la fonction d'ajustement est déterminée de telle sorte que le contenu apparaisse plus proche du conducteur dans la vue ajustée.

10. Procédé selon l'une quelconque des revendications précédentes, comprenant en outre la fourniture d'un arrière-plan à afficher par le dispositif d'affichage avec le contenu, dans lequel la fonction d'ajustement de vue comprend un mouvement de l'arrière-plan par rapport au contenu.

11. Procédé selon l'une quelconque des revendications précédentes, dans lequel le dispositif d'affichage (10) est un affichage tête haute du véhicule.

12. Procédé selon l'une quelconque des revendications précédentes, dans lequel le dispositif d'affichage est un affichage (7) dans un volant (2) du véhicule (1), ou dans lequel le dispositif d'affichage est un affichage dans au moins l'un d'une console centrale (4), d'un tableau de bord (6), d'un rétroviseur (13), et d'un rétroviseur latéral du véhicule (1), ou dans lequel le dispositif d'affichage est un affichage dans une région adjacente à un pare-brise (3) du véhicule (1).

13. Procédé selon l'une quelconque des revendications précédentes, dans lequel le contenu est affiché par le dispositif d'affichage de manière à être entièrement visible uniquement pour le conducteur.

14. Système de traitement de données pour commander un dispositif d'affichage (10) dans un véhicule (1), le système étant configuré pour exécuter le procédé (100) selon l'une quelconque des revendications 1 à 13, le système comprenant une unité d'évaluation (8) et une unité de commande (9), dans lequel l'unité d'évaluation (8) est configurée pour déterminer une condition dépendante de la situation de conduite et pour déterminer une fonction d'ajustement de vue basée sur la condition dépendante de la conduite déterminée, la fonction d'ajustement de vue comprenant un ajustement de position et un ajustement de perspective d'une vue (11) du contenu, et pour déterminer une vue ajustée (12) d'un contenu à afficher conformément à la fonction d'ajustement de vue, et l'unité de commande (9) est configurée pour commander le dispositif d'affichage (10) pour amener le dispositif d'affichage (10) à afficher le contenu dans la vue ajustée (12).

15. Programme informatique ou produit de programme informatique, comprenant des instructions qui, lorsqu'elles sont exécutées sur un ou plusieurs processeurs d'un système selon la revendication 14, amènent le système à exécuter le procédé (100) selon l'une quelconque des revendications 1 à 13.
